# FASCICULE DE BREVET EUROPEEN

(11) **EP 0 679 879 B1**
(45) Date de publication et mention de la délivrance du brevet: **19.08.1998**
(21) Numéro de dépôt: 94400927.3
(22) Date de dépôt: 29.04.1994
(51) Int. Cl.: G01M 3/28, E03F 7/02

(54) **Obturateur pneumatique pour essais sous pression d'air des regards d'assainissement**
Pneumatischer Verschluss zum Prüfen von Kanalisationsschächten mit Druckluft
Pneumatic closure device for testing manholes with air pressure

(43) Date de publication de la demande: 02.11.1995
(73) Titulaire: CHARLATTE, 89400 Migennes (FR)
(72) Inventeur: Roche, Emile, F-01000 Bourg-en-Bresse (FR)
(74) Mandataire: Casalonga, Axel

(56) Documents cités:
- FR-A- 2 535 692
- US-A- 4 373 381
- US-A- 4 763 511
- US-A- 4 964 755

## Description

La présente invention concerne un obturateur pneumatique pour essais sous pression d'air d'un regard de visite sur un réseau d'assainissement.

Avant la mise en service d'un réseau d'assainissement destiné notamment à l'évacuation des eaux usées, il est nécessaire de procéder au contrôle des caractéristiques de ce réseau, en particulier son étanchéité permettant de véhiculer les eaux usées sans fuite. Les réseaux d'assainissement sont essentiellement constitués de regards de visite verticaux et espacés les uns des autres et de collecteurs reliant les parties inférieures des regards de visite entre eux à une certaine profondeur de la surface du sol.

On sait contrôler l'étanchéité des réseaux en isolant des tronçons de collecteurs au moyen d'obturateurs pneumatiques gonflés à l'air comprimé qui obturent les deux extrémités du tronçon isolé. On remplit l'espace ainsi isolé du collecteur avec de l'eau. De même, il est possible de contrôler l'étanchéité des regards de visite en obstruant les orifices à la partie inférieure du regard à l'aide des obturateurs pneumatiques gonflés à l'air comprimé et en remplissant le regard d'eau.

Cependant, les essais à l'eau pour contrôler l'étanchéité du réseau d'assainissement sont longs, coûteux et nécessitent des apports d'eau importants, notamment lorsqu'il s'agit des collecteurs de gros diamètre.

Pour éviter cet inconvénient, il a été envisagé des méthodes d'essais à l'air sous faible pression à la place de l'eau. La mise en oeuvre de ces méthodes ne pose pas de problème particulier lorsqu'il s'agit de tester l'étanchéité des collecteurs puisqu'il suffit de munir les extrémités du tronçon testé (ainsi que les branchements éventuels qu'il peut comporter) des obturateurs pneumatiques gonflés à l'air comprimé. En revanche, les méthodes d'essais à l'air sous pression pour les regards de visite sont beaucoup plus délicates à mettre en oeuvre et ne sont pas pleinement satisfaisantes.

En effet, l'obturateur pneumatique pour le sommet du regard de visite doit assurer l'étanchéité tout en résistant à la pression d'essai de l'air dans le regard de visite. Pratiquement, les obturateurs pneumatiques actuels, connus par exemple par le document US-A-4 373 381 ne peuvent pas être maintenus en place lorsque la pression d'essai dépasse 50 mbars dans le regard de visite. Au-delà de cette pression limite, l'obturateur pneumatique pour le sommet du regard risque d'être éjecté, ce qui représente un danger évident pour les personnes se trouvant au voisinage du regard testé.

Or une pression de 50 mbars est considérée comme insuffisante pour contrôler les fuites éventuelles du regard. Une pression autour de 100 à 150 mbars doit être atteinte en pratique pour garantir les essais d'étanchéité.

Le document US-A-4 964 755 décrit un tampon de regard d'égout muni d'un dispositif de verrouillage. Le dispositif de verrouillage comprend deux doigts de blocage escamotables et déployables radialement sous le tampon par l'actionnement d'une clé. Si ces doigts sont déployés, ils coopèrent avec un rebord annulaire du regard d'égout qui sert de siège au tampon. Ce document vise à résoudre un problème de sécurité en évitant le vol du tampon ou l'accès de personnes non-autorisées dans des passages souterrains.

La présente invention a pour objet de remédier aux inconvénients des solutions classiques en proposant un obturateur pneumatique fiable, facile à installer dans les regards de visite et autorisant une pression importante d'essai dans le regard.

L'invention a en outre pour objet un obturateur pneumatique qui ne présente pas de danger d'utilisation pour le personnel des chantiers.

Un regard de visite sur un réseau d'assainissement est généralement constitué d'un empilement vertical de plusieurs éléments creux : un élément supérieur cylindrique de rehausse constituant le sommet du regard de visite, un élément de réduction sous forme tronconique, un ou plusieurs éléments cylindriques formant le corps du regard de visite et un élément de base sensiblement cylindrique fermé au fond et pourvu de plusieurs orifices qui constituent les entrées et sortie des collecteurs du réseau d'assainissement.

Tel que revendiqué l'obturateur pneumatique pour essais sous pression d'air d'un regard de visite sur un réseau d'assainissement, comprend un plateau circulaire et un joint torique gonflable destiné à entrer en contact étanche avec la paroi intérieure cylindrique constituant le sommet de l'élément de réduction tronconique. Selon l'invention, ce joint gonflable est logé dans une gorge périphérique du plateau circulaire, et l'obturateur pneumatique comprend une structure déployable de blocage disposée coaxialement sous le plateau circulaire et comportant au moins trois doigts escamotables radialement sous le plateau et un organe d'actionnement intermédiaire dont l'axe traverse coaxialement le plateau, et un moyen d'actionnement mécanique pour faire tourner l'axe d'actionnement intermédiaire en vue de déployer ou d'escamoter radialement les doigts de blocage qui coopèrent avec la paroi intérieure de l'élément tronconique du regard de visite.

La structure déployable de blocage peut être réalisée sous forme d'un disque dont la surface supérieure comporte l'axe central d'actionnement intermédiaire et dont la surface inférieure présente plusieurs axes de pivotement pour les doigts escamotables. Les axes de pivotement sont espacés régulièrement et circonférentiellement sur le disque et font saillie axialement vers le bas. Les doigts escamotables présentent une extrémité qui pivote autour des axes de pivotement.

Le plateau circulaire présente de préférence une jupe périphérique s'étendant vers le bas et prolongée par plusieurs protubérances axiales qui sont pourvues chacune d'un passage radial pour recevoir l'extrémité libre d'un doigt escamotable. Ces passages permettent d'une part de guider le mouvement radial des doigts escamotables tout en limitant son mouvement dans le sens circonférentiel, et d'autre part de supporter la structure déployable de blocage en la maintenant ensemble avec le plateau circulaire.

L'invention sera mieux comprise et d'autres avantages apparaîtront à la description détaillée de quelques modes de réalisation de l'invention pris à titre nullement limitatif et illustrés par des dessins annexés, sur lesquels:
la figure 1 est un schéma explicatif des essais d'étanchéité d'un réseau d'assainissement,
la figure 2 montre schématiquement en coupe axiale un regard de visite d'un réseau d'assainissement,
les figures 3a et 3b montrent deux variantes de l'élément de réduction dans un regard de visite,
la figure 4 est une vue en coupe axiale d'un obturateur pneumatique selon un premier mode de réalisation de l'invention,
les figures 5a et 5b montrent deux positions de fonctionnement de l'obturateur de la figure 4,
la figure 6 est une vue partielle schématique en coupe axiale de l'obturateur pneumatique selon un second mode de réalisation de l'invention,
la figure 7 est une vue partielle schématique de l'obturateur pneumatique selon un troisième mode de réalisation de l'invention,
les figures 8a et 8b montrent schématiquement deux positions de fonctionnement de l'obturateur selon la figure 7.

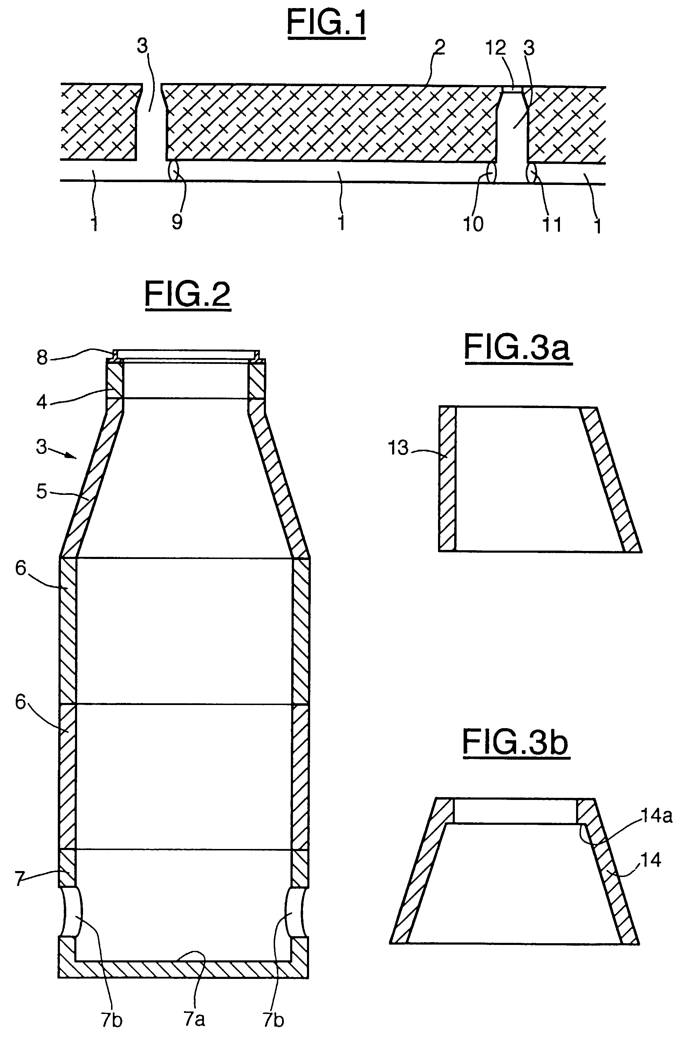

Comme illustré sur les figures 1 et 2, un réseau gravitaire d'assainissement comprend des collecteurs 1 enfouis en dessous de la surface 2 du sol afin de véhiculer les eaux usées, et des regards 3 de visite espacés les uns des autres le long du réseau d'assainissement permettant l'accès aux collecteurs 1 à partir de la surface du sol 2. Chaque regard de visite 3 est constitué d'un empilement vertical d'un certain nombre d'éléments creux à symétrie de révolution : un élément supérieur de rehausse 4 sous forme cylindrique, suivi d'un élément de réduction 5 tronconique dont la base est posée au-dessus d'un ou de plusieurs éléments de corps 6 sous forme cylindrique de même diamètre, et enfin un élément de base 7 dont le fond 7a est fermé et dont les parois latérales comportent des orifices 7b qui sont connectés chacun à une extrémité d'un collecteur 1 pour constituer l'entrée ou la sortie de ce collecteur selon le sens de circulation des eaux usées. L'extrémité supérieure de l'élément de rehausse 4 est généralement équipée d'un cadre métallique 8 pour recevoir de façon amovible un tampon non représenté sous la forme d'un disque métallique posé dans le cadre métallique 8 pour fermer le sommet du regard de visite 3.

Pour effectuer des essais d'étanchéité du réseau, on procède généralement comme suit :
- disposer deux obturateurs pneumatiques 9 et 10 gonflés à l'air comprimé aux deux extrémités d'un collecteur 1 entre deux regards de visite 3 consécutifs et remplir le collecteur 1 ainsi isolé avec l'eau sous pression de quelques mètres à partir d'un réservoir (non représenté) à la surface 2 du sol via un tube flexible (non représenté) qui traverse le regard de visite 3 et l'obturateur pneumatique 9 ou 10 correspondant;
- disposer plusieurs obturateurs pneumatiques 10 et 11 pour obturer tous les orifices 7b de l'élément de base 7 d'un regard de visite 3, le nombre d'obturateurs pneumatiques utilisés devant correspondre au nombre d'orifices 7b du regard de visite concerné. On peut ainsi remplir le regard 3 avec l'eau afin de tester l'étanchéité des parois du regard;
- disposer un obturateur pneumatique 9 à une extrémité du collecteur 1, l'autre extrémité du collecteur débouchant dans un regard 3. Les orifices inférieurs 7b du regard sont obturés par des obturateurs pneumatiques 11 à l'exception d'un orifice relié à l'extrémité non obturée du collecteur 1. On remplit alors le collecteur 1 et le regard 3 avec de l'eau pour tester l'étanchéité de cet ensemble.

Comme il a été évoqué précédemment, les essais à l'eau sont longs, coûteux et nécessitent des apports d'eau importants. Il a été proposé de tester l'étanchéité d'un réseau d'assainissement à l'air sous pression en remplacement de l'eau. Dans ce cas lorsque l'on teste l'étanchéité d'un regard 3, il est nécessaire d'obturer également le sommet du regard par un obturateur pneumatique 12 (figure 1). Pratiquement, les essais sur le collecteur 1 à l'air sous pression ne posent pas de problème particulier. Cependant, les obturateurs pneumatiques 12 pour le sommet de regard de visite 3 ne sont pas adaptés pour supporter une pression de l'air à l'intérieur du regard 3 au-delà de 50 mbars.

L'invention concerne précisément un obturateur pneumatique 12 pour fermer le sommet d'un regard de visite 3 permettant des essais d'étanchéité sous pression d'air à l'intérieur du regard 3 qui peut aller au-delà du 100 mbars tout en améliorant les conditions de sécurité des ouvriers sur le chantier, tous risques d'expulsion de l'obturateur pneumatique 12 par la pression d'air à l'intérieur du regard 3 étant supprimés.

Pour un regard de visite 3 standard, l'élément de rehausse 4 présente une hauteur d'environ 10 cm et un diamètre intérieur de 60 cm. L'élément tronconique de réduction 5 présente une hauteur d'environ 70 cm avec un diamètre intérieur variant de 60 cm à 80 ou 100 cm. Les éléments cylindriques de corps 6 présentent un diamètre intérieur identique à celui à la base de l'élément tronconique 5, c'est-à-dire 80 à 100 cm.

L'élément tronconique régulier 5 peut être remplacé par un élément tronconique irrégulier 13 excentré (figure 3a) ou par un élément tronconique 14 présentant un épaulement radial 14a (figure 3b) qui permet une utilisation avantageuse de l'obturateur selon l'invention.

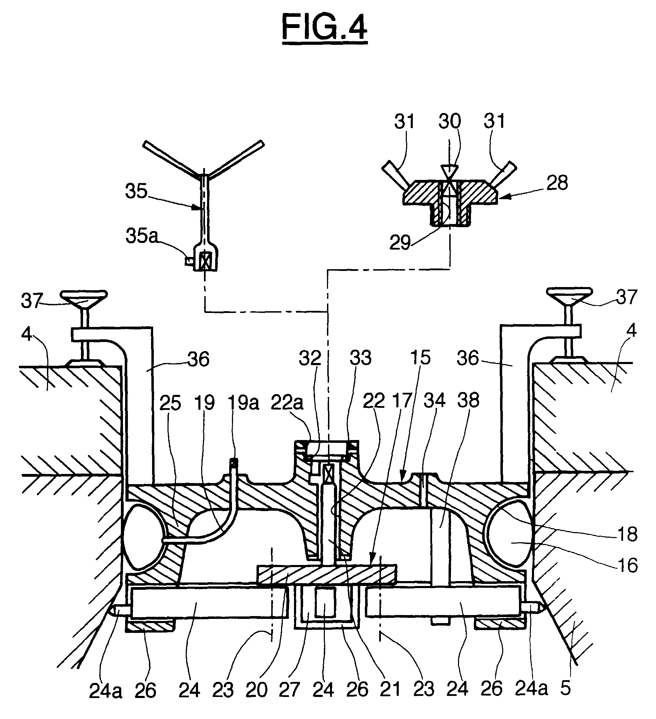

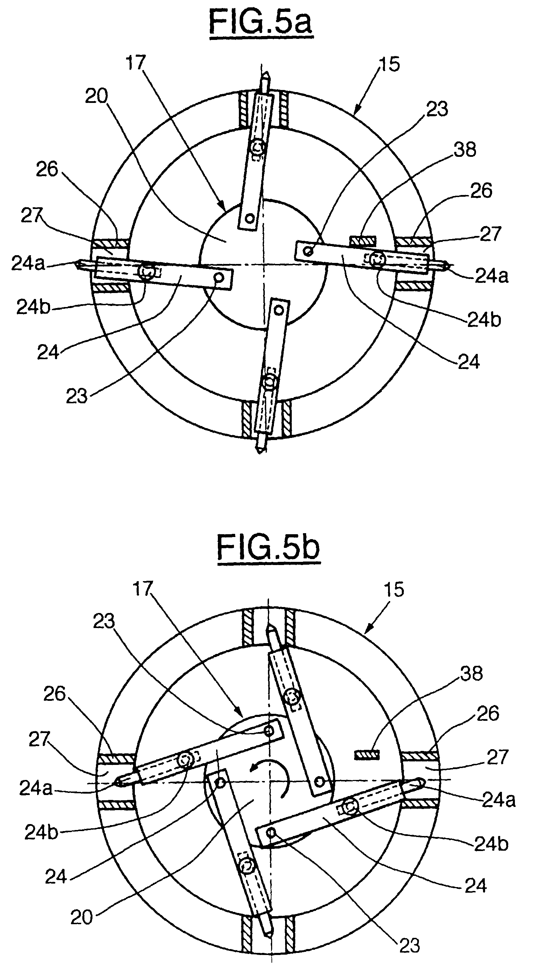

Sur les figures 4, 5a et 5b est représenté un mode de réalisation particulier de l'obturateur pneumatique de l'invention. L'obturateur pneumatique comprend un plateau circulaire 15 coopérant avec un joint torique creux 16 gonflable à l'air comprimé et avec une structure déployable de blocage 17.

Le joint torique gonflable 16 est logé dans une gorge périphérique 18 du plateau circulaire 15 afin d'assurer l'étanchéité entre l'obturateur pneumatique et la paroi intérieure du sommet de l'élément tronconique 5. Le plateau 15 présente un diamètre légèrement inférieur au diamètre intérieur du sommet de l'élément tronconique 5 afin de permettre l'introduction de l'obturateur pneumatique dans le regard de visite 3. Le gonflage et le dégonflage du joint torique 16 s'effectue par l'intermédiaire d'un tuyau 19 traversant le plateau circulaire 15 pour être relié à une source pneumatique de l'air comprimé non représentée. A l'extérieur du plateau circulaire 15 à un endroit accessible, le tuyau d'amenée d'air 19 est pourvu de préférence d'une valve de gonflage 19a.

En-dessous du plateau circulaire 15 se trouve la structure déployable de blocage 17 qui comprend un disque circulaire 20 présentant un axe central d'actionnement intermédiaire 21 qui s'étend axialement vers le haut dans un passage axial central 22 du plateau circulaire 15. Le disque 20 comporte en outre quatre axes de pivotement 23 disposés régulièrement dans le sens circonférentiel sur le disque 20 et s'étendant axialement vers le bas. Chaque axe de pivotement 23 reçoit de façon pivotante une extrémité d'un doigt escamotable 24. Le plateau circulaire 15 présente une jupe périphérique 25 s'étendant vers le bas et se terminant par quatre protubérances axiales 26 régulièrement disposées le long de sa circonférence. Chaque protubérance axiale 26 présente un passage radial 27 pour recevoir, supporter, guider et limiter les mouvements des doigts escamotables 24 de la structure déployable de blocage 17.

Le passage axial central 22 du plateau circulaire 15 présente à la partie supérieure une ouverture 22a filetée pour recevoir par vissage un bouchon 28 qui présente aussi un passage central axial 29 équipé d'une valve 30 de gonflage. Le bouchon 28 est pourvu de poignées 31 permettant son vissage et son dévissage dans l'ouverture supérieure 22a du passage central 22 du plateau circulaire 15.

Pour permettre le gonflage du regard 3 à l'air sous pression, le passage central 22 du plateau circulaire 15 présente un diamètre supérieur au diamètre de l'axe central 21 de la structure déployable 17 en vue de ménager un jeu radial suffisant entre la paroi intérieure du passage central 22 et l'axe central 21 pour permettre le passage de l'air avec un débit suffisant de gonflage du regard. Au besoin, on peut usiner des rainures axiales sur la paroi intérieure du passage central 22 qui est cylindrique. Ainsi on augmente la section de passage pour l'air de gonflage du regard de visite.

L'ouverture supérieure 22a du passage central 22 du plateau circulaire 15 présente un épaulement radial pour recevoir un joint torique 32 et des trous 33 s'étendant radialement à travers la paroi latérale de l'ouverture 22a. Ainsi, le joint torique 32 assure l'étanchéité entre le bouchon 28 et l'ouverture 22a afin de permettre le gonflage sans fuite du regard de visite 3 à travers la valve 30 de gonflage reliée à la source de l'air comprimé (non représentée).

Il est possible de prévoir sur le plateau circulaire 15 un passage 34 qui est fermé par une soupape de sécurité (non représentée) ou muni d'un disque de rupture par exemple. Lorsque la pression à l'intérieur du regard dépasse une pression limite, la soupape de sécurité signale aux ouvriers qu'il faut arrêter le gonflage.

L'obturateur pneumatique de l'invention comprend en outre une clé de manoeuvre 35 pour actionner l'axe d'actionnement intermédiaire 21 de la structure déployable de blocage 17 à travers l'ouverture 22a et une partie du passage central 22 du plateau circulaire 15. Le plateau circulaire 15 peut comporter plusieurs éléments en équerre 36 qui font saillie vers le haut et vers l'extérieur radialement à partir du bord supérieur périphérique du plateau circulaire 15. Chaque élément en équerre 36 coopère avec une tige verticale 37 de hauteur réglable afin de constituer une butée axiale pour le plateau circulaire 15 permettant de le positionner à la hauteur désirée.

De préférence, le passage central 22 présente au voisinage de l'extrémité supérieure de l'axe d'actionnement intermédiaire 21, un logement pour recevoir la clé de manoeuvre 35 pourvue d'un téton latéral 35a, de façon à ce que la clé 35 ne peut être introduite et retirée du logement dans le passage 22 que pour une position angulaire prédéterminée. Cette position angulaire correspond à la position déployée des doigts escamotables 24. Ainsi, le bouchon 28 ne peut être monté dans l'ouverture 22a du plateau circulaire 15 que lorsque l'obturateur pneumatique est mis en place sur le regard de visite afin d'autoriser le gonflage dudit regard aux fins d'essais d'étanchéité et que les doigts escamotables 24 sont déployés.

Pour procéder à un essai sous-pression d'air d'un regard de visite 3 à l'aide de l'obturateur pneumatique de l'invention (figures 4, 5a et 5b), on introduit axialement l'obturateur pneumatique dans l'élément de rehausse 4 du regard. Les éléments en équerre 36 équipés des tiges réglables de butée 37 empêchent l'obturateur de tomber dans le regard de visite. A cet état initial, le joint torique 16 est dégonflé et les doigts 24 escamotés en-dessous du plateau circulaire 15 (figure 5b) et supportés par les passages radiaux 27 des protubérances inférieures 26 du plateau circulaire 15. En fonction de la hauteur de l'élément de rehausse 4, on règle les tiges de butée 37 pour que les doigts escamotables 24 puissent coopérer avec la conicité de l'élément tronconique 5 du regard tout en assurant que le joint torique gonflable 16 puisse coopérer uniquement avec la paroi intérieure cylindrique du sommet de l'élément tronconique 5. La clé 35 est piégée dans le logement du passage 22 du plateau circulaire 15. Le bouchon 28 peut être relié au plateau circulaire 15 par une chaîne (non représentée) pour éviter sa perte intempestive.

Une fois que la hauteur de l'obturateur pneumatique est réglée à l'aide des tiges de butée réglables 37, on actionne la clé de manoeuvre 35 en la tournant par exemple dans le sens des aiguilles d'une montre, pour entraîner en rotation le disque 20 de la structure déployable de blocage 17 via l'axe d'actionnement intermédiaire 21 (sens fléché sur la figure 5b). La rotation du disque 20 entraîne le déplacement circonférentiel des axes de pivotement 23 autour de l'axe 21 d'actionnement intermédiaire. Etant donné que les passages radiaux 27 sont immobiles puisqu'ils font partie du plateau circulaire 15, les doigts 24 se déploient radialement au fur et à mesure que l'on tourne la clé 35, l'extrémité intérieure des doigts 24 pivotant autour des axes de pivotement 23.

Le mouvement de rotation de la structure déployable de blocage 17 est limité par une butée 38 solidaire du plateau circulaire 15 qui peut être réalisée sous forme d'une barre s'étendant axialement vers le bas pour former butée à un des doigts escamotables 24. Une fois arrivé à la position de blocage des doigts 24 (définie par la butée 38), on retire la clé de manoeuvre 35 de son logement à l'intérieur du passage central 22 du plateau circulaire 15. On actionne la valve de gonflage 19a pour gonfler à l'air comprimé le joint torique 16 afin d'assurer l'étanchéité entre la paroi intérieure cylindrique du sommet de l'élément tronconique 5 et l'obturateur pneumatique de l'invention. Cette opération de gonflage du joint torique 16 peut être effectué également avant l'actionnement de la structure déployable de blocage 17 par la clé de manoeuvre 35.

Après que l'obturateur pneumatique est correctement installé dans le regard 3, c'est-à-dire après le blocage mécanique des doigts 24 de la structure déployable 17 sur la paroi intérieure tronconique de l'élément de réduction 5 et l'étanchéité entre le joint torique gonflable 16 et la paroi intérieure du sommet de l'élément tronconique 5, on introduit l'air sous pression à l'intérieur du regard de visite par la valve 30 de gonflage à travers successivement le passage central 29 du bouchon 28 et le jeu radial entre le passage central 22 du plateau circulaire 15 et l'axe d'actionnement intermédiaire 21 de la structure déployable de blocage 17. On arrête le gonflage lorsque la pression d'air à l'intérieur du regard de visite atteint une valeur prédéterminée, par exemple une valeur comprise entre 100 et 200 mbars. L'adjonction d'une soupape de sécurité (non représentée) à la sortie du passage 34 du plateau circulaire 15 permet de supprimer le danger d'oubli des ouvriers lors du gonflable du regard, car au-delà d'une pression limite dans le regard de visite, la soupape de sécurité s'ouvre pour diminuer la pression intérieure du regard. Ainsi, on élimine un risque de détériorer le regard de visite par une pression de gonflage excessive et un danger potentiel pour les ouvriers sur le chantier.

De préférence, la position de la butée angulaire 38 se trouve légèrement au-delà de la position de déploiement maximal des doigts escamotables 24 (figure 5a). De cette façon, les doigts 24 sont bloqués angulairement d'une part par la butée 38 et d'autre part par sa position de déploiement maximal. Ce blocage améliore donc la sécurité mécanique d'utilisation de l'obturateur pneumatique. En effet, l'effort exercé par la pression d'air à l'intérieur du regard ne peut pas faire tourner la structure déployable 17 dans ce cas, et les doigts 24 restent en position déployée pour s'accrocher sur les parois coniques de l'élément de réduction 5 du regard de visite.

A la fin des essais d'étanchéité, on dévisse le bouchon 28 jusqu'à ce que son extrémité inférieure laisse les trous radiaux 33 de l'ouverture 22a en communication avec le passage central 22 du plateau circulaire 15. L'air à l'intérieur du regard de visite s'échappe ainsi vers le milieu ambiant au-dessus du plateau circulaire 15 à la pression atmosphérique. Après cette opération de dépressurisation du regard de visite, on retire le bouchon 28 de l'ouverture 22a du passage 22 du plateau circulaire 15. On dégonfle le joint torique 16. On introduit la clé de manoeuvre 35 dans son logement intérieur du passage central 22 du plateau 15 et l'on actionne la structure déployable 17 en tournant la clé de manoeuvre 35 (dans le sens inverse des aiguilles d'une montre par exemple). Les doigts escamotables 24 franchissent tout d'abord leur position de déploiement maximal pour ensuite s'escamoter radialement sous le plateau circulaire 15. On peut alors retirer l'obturateur pneumatique du regard de visite, la clé de manoeuvre 35 restant bloquée dans son logement à l'intérieur du passage central 22 du plateau circulaire 15.

De préférence, pour répondre aux contraintes d'usure des extrémités des doigts escamotables 24 qui sont destinés à entrer en contact avec les parois intérieures des regards de visite, chaque doigt est réalisé en deux parties : une partie support 24 et une partie amovible 24a. La partie amovible 24a peut être réalisée sous forme d'une tige qui s'enfile dans un trou longitudinal de la partie support 24. Une vis de blocage 24b permet de fixer la tige amovible 24a dans le trou aménagé de la partie support 24 (figures 5a et 5b). De cette façon, on peut changer facilement les tiges usées 24a par des tiges neuves chaque fois qu'il le devient nécessaire.

Il est intéressant de remarquer que la mise en pression de l'intérieur du regard 3 entraîne une légère remontée de l'obturateur si l'extrémité libre des tiges 24a des doigts escamotables n'est pas bien en butée contre la paroi intérieure de l'élément de réduction 5. Cette remontée est faible car limitée par la conicité de ladite paroi. Par ailleurs, la faible différence entre le diamètre du plateau circulaire 15 et le diamètre intérieur du sommet de l'élément de réduction tronconique 5 évite un basculement de l'obturateur dans le cas où l'une des extrémités des tiges 24a ne se trouve pas en appui sur la paroi intérieure de l'élément tronconique 5.

Pour améliorer le blocage de l'obturateur pneumatique de l'invention dans le regard de visite, il est possible de prévoir un épaulement radial 14a intérieur sur l'extrémité supérieure de l'élément tronconique 14 (figure 3b). Cet épaulement intérieur 14a permet de manière certaine de limiter le mouvement axial de l'obturateur pneumatique vers le haut lorsque la pression de gonflage à l'intérieur du regard de visite est importante.

Certains types de regards de visite sont équipés d'un élément de réduction tronconique excentré 13 (figure 3a) à la place d'un élément tronconique régulier 5 (figure 2). Dans ce cas, il suffit de monter des tiges amovibles 24a de longueurs différentes appropriées de façon à pouvoir bloquer l'obturateur pneumatique malgré la différence de conicité dans le sens circonférentiel de l'élément de réduction 13. Il peut être avantageux de prévoir sur le plateau circulaire 15 un marquage permettant de repérer les positions angulaires respectives des doigts escamotables 24 de différentes longueurs. On peut alors tracer un autre repère sur le sol du chantier pour indiquer une position angulaire représentative de l'excentricité de l'élément conique 13 du regard de visite. Sur le chantier, il suffit donc d'orienter le marquage sur le plateau circulaire 15 par rapport au marquage sur le sol pour être certain que la position angulaire de l'obturateur pneumatique est appropriée pour répondre à l'excentricité de l'élément tronconique 13 du regard de visite.

L'obturateur est donc utilisable sur des éléments tronconiques de formes et de dimensions différentes puisqu'il suffit d'adapter la longueur des parties amovibles 24a pour les doigts escamotables 24.

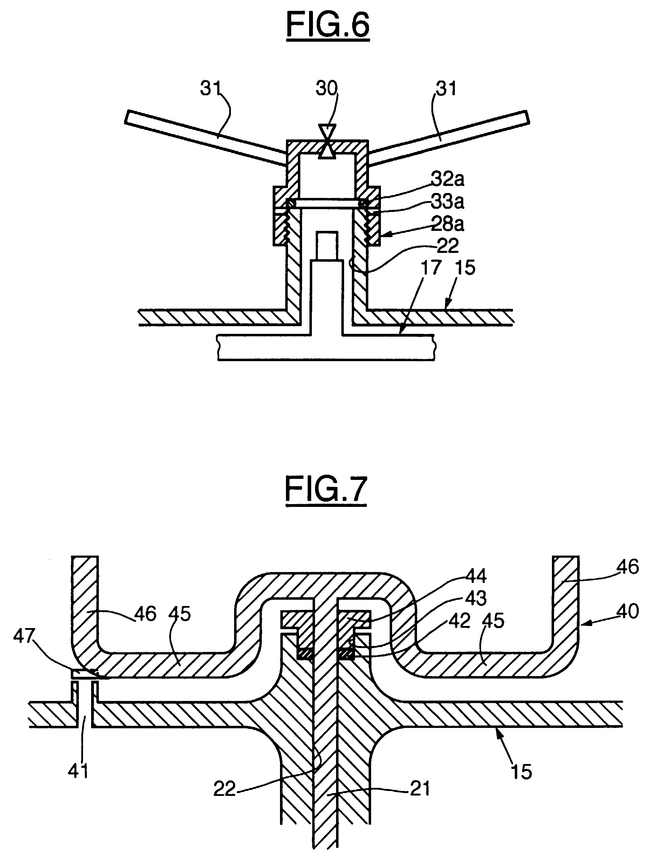

La figure 6 illustre schématiquement une variante d'exécution par rapport au mode précédemment décrit. Au lieu d'avoir un bouchon 28, il est prévu ici un chapeau 28a qui peut être vissé et dévissé autour de la partie d'extrémité supérieure de la paroi latérale du passage central 22 du plateau circulaire 15. Le chapeau 28a présente un épaulement radial dans lequel est logé un joint torique d'étanchéité 32a et des trous radiaux 33a répondant aux mêmes fonctions que le joint d'étanchéité 32 et les trous radiaux 33 de la figure 4.

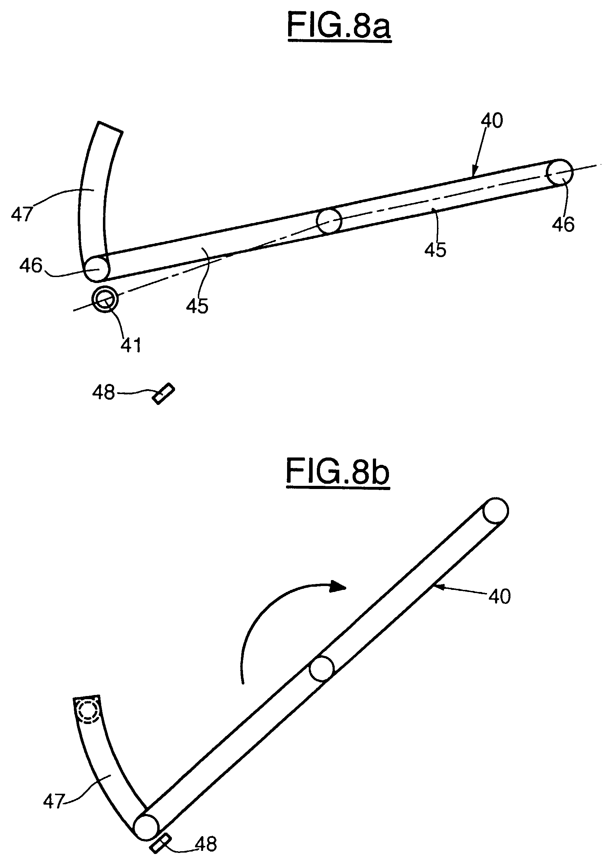

Les figures 7, 8a et 8b montrent une autre variante d'exécution de l'invention par rapport au mode de réalisation sur la figure 4. La clé de manoeuvre 40 est rendue solidaire de l'extrémité supérieure de l'axe d'actionnement intermédiaire 21 ou réalisée en une seule pièce avec cette dernière. Un passage d'air 41 est prévu sur le plateau circulaire 15 pour mettre sous pression ou dépressuriser le regard de visite pendant les essais d'étanchéité de ce dernier. Il n'est plus nécessaire dans ces conditions que le passage central 22 du plateau circulaire 15 présente un jeu radial avec l'axe d'actionnement intermédiaire 21 de la structure déployable 17. Un joint d'étanchéité 42 est piégé au fond d'un évidement axial 43 concentrique au passage central 22 du plateau circulaire 15 par un élément d'emboîtement axial 44.

La clé de manoeuvre 40 telle qu'illustrée présente deux branches horizontales 45 prolongées par deux poignées 46 de manoeuvre s'étendant axialement vers le haut. Le passage d'air 41 se trouve de préférence dans un rayon inférieur ou égal au rayon d'actionnement de la clé de manoeuvre 40 par rapport à l'axe 21. Ainsi il est possible de prévoir une cache de sécurité 47 pour le passage d'air 41. La cache de sécurité 47 peut être réalisée sous forme d'une plaque, rendue solidaire, par soudage par exemple, d'une branche 45 de la clé de manoeuvre 40.

Comme illustré sur les figures 8a et 8b, l'actionnement angulaire (dont la faible amplitude est volontairement choisie pour la commodité des dessins) de la clé de manoeuvre 40 entre la position complètement escamotée des doigts 24 (délimitée par une butée 48 sur le plateau circulaire 15) et une position déployée de blocage de ces doigts permet soit de cacher le passage d'air 41 soit de laisser le passage d'air 41 accessible pour le branchement des moyens de gonflage pneumatique (non représentés).

Cette variante de réalisation de l'invention présente l'avantage de réduire le nombre de pièces de l'obturateur (suppression du bouchon 28 ou du chapeau 28a) en rendant la clé de manoeuvre 40 solidaire de l'axe d'actionnement intermédiaire 21. En outre, la cache de sécurité 47 ne permet pas l'accès au passage d'air 41 du plateau circulaire 15 pour le branchement des moyens de gonflage pneumatique tant que la structure déployable 17 ne se trouve pas en position déployée et bloquée. De plus, il est possible de commander la mise sous pression ou la dépressurisation du regard de visite à travers le passage d'air 41 à distance par une valve sur le circuit d'alimentation pneumatique (non représenté).

## Revendications

1. Obturateur pneumatique pour essais sous pression d'air d'un regard de visite (3) sur un réseau d'assainissement, le regard de visite comprenant au sommet un élément de rehausse (4) sous forme d'un cylindre creux et un élément de réduction (5, 13, 14) sous forme tronconique creux, l'obturateur pneumatique comprenant un plateau circulaire (15) de diamètre légèrement inférieur au diamètre intérieur de l'élément de rehausse (4) et du sommet de l'élément de réduction (5, 13, 14) et un joint torique gonflable (16),
caractérisé en ce que le joint gonflable (16) est logé dans une gorge périphérique (18) du plateau circulaire (15) et
en ce que l'obturateur pneumatique comprend une structure déployable de blocage (17) disposée coaxialement sous le plateau circulaire (15) et comportant au moins trois doigts (24) escamotables radialement sous le plateau circulaire (15) et un organe d'actionnement intermédiaire (20, 21) dont l'axe (21) est logé dans un passage central (22) du plateau circulaire (15), et un moyen d'actionnement mécanique (35, 40) agissant sur l'axe (21) pour escamoter ou déployer radialement les doigts par rapport à la paroi interne de l'élément tronconique de réduction (5, 13, 14).

2. Obturateur pneumatique selon la revendication 1, caractérisé en ce que le plateau circulaire (15) présente une jupe périphérique (25) s'étendant axialement et se terminant par au moins trois protubérances axiales (26), chaque protubérance présentant un passage radial (27) pour recevoir une partie d'extrémité d'un doigt escamotable (24).

3. Obturateur pneumatique selon la revendication 1 ou 2, caractérisé en ce que l'organe d'actionnement intermédiaire comprend un disque (20) avec au moins trois axes de pivotement (23) pour les doigts escamotables (24), les axes de pivotement (23) faisant saillie vers le bas et étant régulièrement répartis circonférentiellement sur le disque.

4. Obturateur pneumatique selon l'une des revendications précédentes, caractérisé en ce qu'il comprend une butée (38) pour le mouvement de déploiement des doigts escamotables (24) à une position angulaire dépassant légèrement la position de déploiement maximal des doigts escamotables.

5. Obturateur pneumatique selon l'une des revendications précédentes, caractérisé en ce que chaque doigt escamotable (24) est composé de deux parties : une partie de support et une partie d'extrémité amovible (24a), la partie d'extrémité amovible étant montée dans un trou longitudinal de la partie support et y est bloquée par une vis de blocage (24b).

6. Obturateur pneumatique selon une des revendications précédentes, caractérisé en ce que le plateau circulaire (15) présente sur son bord supérieur périphérique plusieurs éléments en équerre (36) s'étendant vers le haut et vers l'extérieur radialement et coopérant chacun avec une tige réglable en hauteur (37) pour constituer une butée pour le positionnement en hauteur de l'obturateur par rapport au regard de visite.

7. Obturateur pneumatique selon une des revendications précédentes, caractérisé en ce que le moyen d'actionnement mécanique (40) est une clé de manoeuvre solidaire de l'extrémité supérieure de l'axe (21) d'actionnement intermédiaire, la clé de manoeuvre présentant deux branches radiales (45) se terminant par deux poignées de manoeuvre (46) s'étendant axialement vers le haut, et que le plateau circulaire (15) présente un passage d'air (41) qui est masqué par une cache (47) solidaire d'une branche de la clé de manoeuvre à l'exception de la position déployée des doigts escamotables (24) où le passage d'air (41) est accessible par le haut du plateau circulaire.

8. Obturateur pneumatique selon une des revendications 1 à 6, caractérisé en ce que le passage central axial (22) du plateau circulaire (15) présente un jeu radial par rapport à l'axe (21) d'actionnement intermédiaire de la structure déployable (17) pour constituer un passage d'air et un logement pour recevoir une clé de manoeuvre (35) qui ne peut être retirée du logement que lorsque la structure déployable (17) est en position déployée bloquée, et qu'un bouchon (28) ou un chapeau (28a) vient fermer de façon étanche l'extrémité supérieure du passage central (22) après le retrait de la clé de manoeuvre amovible.

9. Obturateur pneumatique selon la revendication 8, caractérisé en ce que le bouchon (28) ou le chapeau (28a) présente un passage intérieur (29) équipé d'une valve de gonflage (30).

10. Obturateur pneumatique selon la revendication 8 ou 9, caractérisé en ce que la paroi latérale de l'extrémité supérieure du passage central (22) du plateau circulaire (15) ou le chapeau (28a) présente des trous radiaux (33, 33a) pour la décompression du regard de visite avant la séparation du bouchon (28) ou du chapeau (28a) par rapport au passage central (22) du plateau circulaire.

11. Obturateur pneumatique selon une des revendications précédentes, caractérisé en ce que le plateau circulaire (15) présente un passage d'air (34) équipé d'une soupape de sécurité.

## Patentansprüche

1. Pneumatischer Verschluß zum Prüfen eines Kontrollschachtes (3) bei einem Kanalisationsnetz mit Druckluft, wobei der Kontrollschacht auf seiner Oberseite ein Aufsatzelement (4) in Form eines Hohlzylinders und ein Reduzierelement (5,13,14) in Form eines hohlen Kegelstumpfes aufweist und wobei der pneumatische Verschluß eine kreisförmige Platte (15), deren Durchmesser wenig kleiner ist als der Innendurchmesser des Aufsatzelementes (4) und der Oberseite des Reduzierelementes (5,13,14), und eine aufblasbare ringförmige Dichtung (16) aufweist,
dadurch gekennzeichnet, daß die aufblasbare Dichtung (16) in einer Umfangs-Hohlkehle (18) der kreisförmigen Platte (15) liegt und
daß der pneumatische Verschluß eine ausfahrbare Verriegelungsstruktur (17), welche koaxial unter der kreisförmigen Platte (15) angeordnet ist und mindestens drei unterhalb der kreisförmigen Platte (15) radial einziehbare Finger (24) sowie ein Zwischenbetätigungsorgan (20,21), dessen Achse (21) in einer zentralen Öffnung (22) der kreisförmigen Platte (15) liegt, besitzt, und außerdem ein mechanisches Betätigungselement (35,40) umfaßt, welches auf die Achse (21) einwirkt, um die Finger radial bezüglich der Innenwand des kegelstumpfförmigen Reduzierelementes (5,13,14) einzuziehen oder auszufahren.

2. Pneumatischer Verschluß nach Anspruch 1, dadurch gekennzeichnet, daß die kreisförmige Platte (15) einen Umfangsmantel (25) aufweist, welcher sich in Axialrichtung erstreckt und in mindestens drei axialen Vorsprüngen (26) endet, wobei jeder Vorsprung eine Radialdurchführung (27) zur Aufnahme eines Endabschnittes eines einziehbaren Fingers (24) aufweist.

3. Pneumatischer Verschluß nach Anspruch 1 oder 2, dadurch gekennzeichnet, daß das Zwischenbetätigungsorgan eine Scheibe (20) mit mindestens drei Schwenkachsen (23) für die einziehbaren Finger (24) besitzt, wobei die Schwenkachsen (23) nach unten vorspringen und gleichmäßig über den Umfang der Scheibe verteilt sind.

4. Pneumatischer Verschluß nach einem der vorangehenden Ansprüche, dadurch gekennzeichnet, daß er einen Anschlag (38) für die Ausfahrbewegung der einziehbaren Finger (24) bei einer Winkelposition besitzt, welche wenig von der maximalen Ausfahrposition der einziehbaren Finger abweicht.

5. Pneumatischer Verschluß nach einem der vorangehenden Ansprüche, dadurch gekennzeichnet, daß jeder einziehbare Finger (24) aus zwei Teilen zusammengesetzt ist: einem Trägerteil und einem abnehmbaren Endteil (24a), wobei der abnehmbare Endteil in einer Längsbohrung des Trägerteils angeordnet und dort mit einer Klemmschraube (24b) fixiert ist.

6. Pneumatischer Verschluß nach einem der vorangehenden Ansprüche, dadurch gekennzeichnet, daß die kreisförmige Platte (15) auf ihrem oberen Umfangsrand mehrere Winkelelemente (36) aufweist, welche sich nach oben und radial nach außen erstrecken und jeweils mit einer höhenverstellbaren Stange (37) zusammenwirken, um ein Gegenlager für die Höheneinstellung des Verschlusses bezüglich des Kontrollschachtes zu bilden.

7. Pneumatischer Verschluß nach einem der vorangehenden Ansprüche, dadurch gekennzeichnet, daß das mechanische Betätigungselement (40) ein Betätigungsschlüssel ist, der fest mit dem oberen Ende der Achse (21) des Zwischenbetätigungselementes verbunden ist, wobei der Betätigungsschlüssel zwei Radialarme (45) aufweist, die in zwei sich axial nach oben erstreckenden Betätigungshandgriffen (46) enden, und daß die kreisförmige Platte (15) eine Lüftungsöffnung (41) aufweist, welche von einer fest mit einem Arm des Betätigungsschlüssels verbundenen Abdeckung (47) überdeckt ist, ausgenommen die Ausfahrposition der einziehbaren Finger (24), wo die Lüftungsöffnung (41) von der Oberseite der kreisförmigen Platte zugänglich ist.

8. Pneumatischer Verschluß nach einem der Ansprüche 1 bis 6, dadurch gekennzeichnet, daß die zentrale Axialöffnung (22) der kreisförmigen Platte (15) ein Radialspiel bezüglich der Zwischenbetätigungsachse (21) der ausfahrbaren Struktur (17) aufweist, um einen Luftdurchlaß und ein Lager zur Aufnahme eines Betätigungsschlüssels (35) zu bilden, der aus dem Lager nur abziehbar ist, wenn die ausfahrbare Struktur (17) sich in blockierter Ausfahrposition befindet, und daß ein Stöpsel (28) oder eine Kappe (28a) das obere Ende der zentralen Öffnung (22) nach dem Abziehen des abnehmbaren Betätigungsschlüssels dicht verschließt.

9. Pneumatischer Verschluß nach Anspruch 8, dadurch gekennzeichnet, daß der Stöpsel (28) oder die Kappe (28a) einen Innendurchgang (29) aufweist, der mit einem Aufblasventil (30) versehen ist.

10. Pneumatischer Verschluß nach Anspruch 8 oder 9, dadurch gekennzeichnet, daß die Seitenwand des oberen Endes der zentralen Öffnung (22) der kreisförmigen Platte (15) oder die Kappe (28a) Radiallöcher (33,33a) zur Druckverminderung des Kontrollschachtes vor der Abnahme des Stöpsels (28) bzw. der Kappe (28a) von der zentralen Öffnung (22) der kreisförmigen Platte aufweist.

11. Pneumatischer Verschluß nach einem der vorangehenden Ansprüche, dadurch gekennzeichnet, daß die kreisförmige Platte (15) eine mit einem Sicherheitsventil versehene Entlüftungsöffnung (34) aufweist.

## Claims

1. Pneumatic closure device for air-pressure tests on an inspection manhole (3) of a sewerage system, the inspection manhole comprising, at the top, a casing element (4) in the form of a hollow cylinder and a reduction element (5, 13, 14) in the form of a hollow cone frustum, the pneumatic closure device comprising a circular plate (15) having a diameter slightly smaller than the inside diameter of the casing element (4) and of the top of the reduction element (5, 13, 14) and an inflatable O-ring seal (16), characterized in that the inflatable seal (16) is accommodated in a peripheral groove (18) of the circular plate (15), and in that the pneumatic closure device comprises an extendable blocking structure (17) arranged coaxially under the circular plate (15) and comprising at least three fingers (24) retractable radially under the circular plate (15) and an intermediate actuating member (20, 21), the shaft (21) of which is accommodated in the central passage (22) of the circular plate (15), and a mechanical actuating means (35, 40) acting on the shaft (21) in order to retract or extend radially the fingers in relation to the inner wall of the frustoconical reduction element (5, 13, 14).

2. Pneumatic closure device according to Claim 1, characterized in that the circular plate (15) has a peripheral skirt (25) extending axially and terminating in at least three axial protuberances (26), each protuberance having a radial passage (27) for receiving an end part of a retractable finger (24).

3. Pneumatic closure device according to Claim 1 or 2, characterized in that the intermediate actuating member comprises a disc (20) with at least three pivot shafts (23) for the retractable fingers (24), the pivot shafts (23) projecting downwards and being uniformly distributed circumferentially on the disc.

4. Pneumatic closure device according to one of the preceding claims, characterized in that it comprises a stop (38) for the extension movement of the retractable fingers (24) to an angular position slightly exceeding the position of maximum extension of the retractable fingers.

5. Pneumatic closure device according to one of the preceding claims, characterized in that each retractable finger (24) is composed of two parts: a supporting part and a removable end part (24a), the removable end part being fitted into a longitudinal hole of the supporting part and being blocked there by means of a blocking screw (24b).

6. Pneumatic closure device according to one of the preceding claims, characterized in that the circular plate (15) has, on its peripheral upper edge, a plurality of angle bracket elements (36) extending upwards and radially outwards and each cooperating with a rod of adjustable height (37) in order to form a stop for positioning the closure device in terms of height relative to the inspection manhole.

7. Pneumatic closure device according to one of the preceding claims, characterized in that the mechanical actuating means (40) is an operating key fixed to the upper end of the intermediate actuating shaft (21), the operating key having two radial branches (45) terminating in two operating handles (46) extending axially upwards, and in that the circular plate (15) has an air passage (41) which is masked by a guard (47), fixed to one branch of the operating key, with the exception of the extended position of the retractable fingers (24), in which position the air passage (41) is accessible from the top of the circular plate.

8. Pneumatic closure device according to one of Claims 1 to 6, characterized in that the axial central passage (22) of the circular plate (15) has a radial play relative to the intermediate actuating shaft (21) of the extendable structure (17), in order to form an air passage and a receptacle for receiving an operating key (35) which can be removed from the receptacle only when the extendable structure (17) is in the blocked extended position, and in that a plug (28) or a cap (28a) closes the upper end of the central passage (22) leaktightly after the removable operating key has been removed.

9. Pneumatic closure device according to Claim 8, characterized in that the plug (28) or the cap (28a) has an inner passage (29) equipped with an inflating valve (30).

10. Pneumatic closure device according to Claim 8 or 9, characterized in that the side wall of the upper end of the central passage (22) of the circular plate (15) or the cap (28a) has radial holes (33, 33a) for the decompression of the inspection manhole before the plug (28) or the cap (28a) is separated from the central passage (22) of the circular plate.

11. Pneumatic closure device according to one of the preceding claims, characterized in that the circular plate (15) has an air passage (34) equipped with a safety valve.
